(19) Europäisches Patentamt
European Patent Office
Office européen des brevets

(11)  **EP 3 875 902 B1**

(12)  **EUROPEAN PATENT SPECIFICATION**

(45) Date of publication and mention
of the grant of the patent:
**21.02.2024  Bulletin 2024/08**

(21) Application number: **18940643.2**

(22) Date of filing: **21.11.2018**

(51) International Patent Classification (IPC):
**G01C 11/00** *(2006.01)*     **G08G 5/00** *(2006.01)*

(52) Cooperative Patent Classification (CPC):
**G01C 11/00; G06V 10/22; G06V 20/17;
G08G 5/0013; G08G 5/0026; G08G 5/0052;
G08G 5/0069; G08G 5/0086;** G06V 10/16

(86) International application number:
**PCT/CN2018/116658**

(87) International publication number:
**WO 2020/103021 (28.05.2020 Gazette 2020/22)**

(54)  **PLANNING METHOD AND APPARATUS FOR SURVEYING AND MAPPING SAMPLING POINTS, CONTROL TERMINAL AND STORAGE MEDIUM**

PLANUNGSVERFAHREN UND VORRICHTUNG ZUR VERMESSUNG UND ABBILDUNG VON ABTASTPUNKTEN, STEUERENDGERÄT UND SPEICHERMEDIUM

PROCÉDÉ ET APPAREIL DE PLANIFICATION POUR EXAMINER ET CARTOGRAPHIER DES POINTS D'ÉCHANTILLONNAGE, TERMINAL DE COMMANDE ET SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.09.2021  Bulletin 2021/36**

(73) Proprietor: **Guangzhou Xaircraft Technology Co.,
Ltd
Tianhe District
Guangzhou,
Guangdong 510000 (CN)**

(72) Inventors:
• **LIU, Peng
Guangdong 510000 (CN)**
• **JIN, Xiaohui
Guangdong 510000 (CN)**

(74) Representative: **Murgitroyd & Company
Murgitroyd House
165-169 Scotland Street
Glasgow G5 8PL (GB)**

(56) References cited:
**WO-A1-2018/176376     US-A1- 2017 221 241**

## Description

TECHNICAL FIELD

Embodiments of the present disclosure relate to the field of surveying and mapping technologies, for example, to a method for planning sample points for surveying and mapping and a control terminal.

BACKGROUND

In recent years, an Unmanned Aerial Vehicle (UAV) has been widely used in the fields of surveying and mapping, emergency response, disaster relief, etc. due to its characteristics such as high efficiency, flexibility and low cost. An UAV aerial surveying and mapping (aerial surveying for short) technology can greatly reduce work cycle and investment of manpower and financial resources in a traditional aerial surveying and mapping technology and thus has more realistic significance in the fields of surveying and mapping technologies, etc.

In a UAV aerial surveying and mapping technology, a status of an aerial photography area is observed by a carried video capture device using a remote image transmission technology, and captured photos are stitched by using an aerial photography image mosaic technology, so as to get an overall image of the aerial photography area. In a traditional UAV aerial surveying and mapping method, a traversal method along parallel lines is usually adopted to conduct mobile surveying and mapping in an area to be surveyed and mapped when photos are being taken, and a certain degree of overlap between every two consecutive photos is usually required for ensuring a successful stitching. In order to ensure a subsequent normal stitching, a photo is required to have a certain degree of overlap with other photos in both horizontal and vertical directions. Generally speaking, in order to ensure the subsequent normal stitching, the degree of overlap is generally required to be greater than 50%.

US2017/221241A1 discloses a system for generating building maps, including an unmanned aerial vehicle carrying at least one imaging device, and a computing device connected to the unmanned aerial vehicle. In particular, the computing device can be configured to select target image areas having boundaries that overlap by a preconfigured amount, to aid in image capture and composite generation. Computing device can then be configured to generate flight path data by generating a plurality of flight path segments that connect the target image areas (e.g., the center of each target image area) in sequence.

WO2018/176376A1 discloses an environmental information collection method, ground station and aircraft. In particular, the aircraft uses a camera to shoot a target object at a flight height, for example, the camera is used to shoot the target object vertically downward to obtain a captured image, and obtain the size information (such as length, width) of the captured image, and then according to the size information of the captured image, determines images to be shot to cover the specified shooting range, including the number of images to be shot and their positions within the shooting range. The orientation of the center point of each image (i.e., the intersection of the diagonals of the rectangular area) is taken as the photographing orientation corresponding to each shot, and the trajectory formed by connecting the center point of each image to be photographed according to a preset rule is determined as the flight path of the aircraft within the shooting range. The preset rule may be the "S" type rule shown in FIG. 2 of WO2018/176376A1, that is, the obtained flight trajectory S-shaped.

In a process of implementing the present disclosure, the inventor found that the related art has the following defects: the traditional UAV aerial surveying and mapping methods are all for surveying and mapping an aerial photography area of a large plot, and it is required to take a plurality of photos with high degree of overlap in a surveying and mapping process. It is time-consuming and inefficient to stitch the above photos taken by the UAV. In addition, if the photos obtained by the UAV are uploaded to a server for stitching, a process of data uploading and processing takes longer. At the same time, when a traditional UAV aerial surveying and mapping method is applied to small plot surveying and mapping, not only operation is complicated and processing time is long, but also a hardware cost is high.

SUMMARY

Embodiments of the present disclosure provide a method and an apparatus for planning sample points for surveying and mapping, a control terminal and a storage medium, so as to reduce surveying and mapping cost and improve surveying and mapping efficiency.

According to the invention there is provided a method for planning sample points for surveying and mapping, including:

obtaining a combined photographing area corresponding to a combined photographing point set, where the combined photographing point set comprises: a central photographing point and four peripheral photographing points, and the four peripheral photographing points are four vertices of a rectangle centered on the central photographing point; the combined photographing area is an area synthesized by photos taken at the central photographing point and the four peripheral photographing points; a relative position relationship between the central photographing point and the four peripheral photographing points meets a condition as follows: a composite photo to be obtained by photographing based on the central photographing point and the four peripheral photographing points is of a rectangular shape; each photo to be obtained based on each of the four peripheral photographing points and a photo to be obtained based on the central photographing point meet a preset photo overlap degree index, the preset photo overlap degree index is configured to characterize an overlap degree between the photo to be obtained based on each of the four peripheral photographing points and the photo to be obtained based on the central photographing point; and an overlap degree between photos to be obtained based on each two peripheral photographing points is less than the preset photo overlap degree index; determining, within an area to be surveyed and mapped, a plurality of combined photographing areas for surveying and mapping according to a shape and size of the combined photographing area corresponding to the combined photographing point set and a shape and size of the area to be surveyed and mapped, where the plurality of combined photographing areas for surveying and mapping are photographing areas that are independent from each other and formed by dividing the area to be surveyed and mapped according to the shape and size of the combined photographing area and the shape and size of the area to be surveyed and mapped, and a shape and size of each of the plurality of photographing areas is the same as a shape and size of the combined photographing area; determining, in each of the plurality of combined photographing areas for surveying and mapping, a plurality of photographing location points according to the relative position relationship between the central photographing point and the four peripheral photographing points, comprising: mapping the central photographing point in the combined photographing point set to an area midpoint with geographic position information and in the combined photographing area for surveying and mapping, and determining the area midpoint as a photographing location point; and mapping respectively the four peripheral photographing points to four photographing location points with geographic position information and in the combined photographing area for surveying and mapping according to the relative position relationship between the central photographing point and the four peripheral photographing points; and determining the plurality of photographing location points as the sample points for surveying and mapping by an aircraft for surveying and mapping.

Optionally, there is an overlapping area among a plurality of photos taken at the central photographing point and the four peripheral photographing points in the combined photographing point set.

Optionally, there is an overlapping area among the plurality of combined photographing areas for surveying and mapping determined in the area to be surveyed and mapped.

The combined photographing area for surveying and mapping is a photographing area formed by combining and/or stitching a plurality of photos taken at the central photographing point and the four peripheral photographing points in the combined photographing point set.

Optionally, the determining, within an area to be surveyed and mapped, a plurality of combined photographing areas for surveying and mapping according to a shape and size of the combined photographing area corresponding to the combined photographing point set and a shape and size of the area to be surveyed and mapped, includes:

selecting a locating point in the area to be surveyed and mapped, where the locating point is configured to locate the combined photographing area for surveying and mapping in the area to be surveyed and mapped;

determining a combined photographing area for surveying and mapping within the area to be surveyed and mapped according to the locating point and the combined photographing area; and

if the combined photographing area for surveying and mapping fails to completely cover the area to be surveyed and mapped, selecting a new locating point in the area to be surveyed and mapped, and returning to execute an operation of determining a combined photographing area for surveying and mapping within the area to be surveyed and mapped according to the locating point and the combined photographing area, until all combined photographing areas for surveying and mapping that completely cover the area to be surveyed and mapped are determined.

Optionally, before the determining, within an area to be surveyed and mapped, a plurality of combined photographing areas for surveying and mapping according to a shape and size of the combined photographing area corresponding to the combined photographing point set and a shape and size of the area to be surveyed and mapped, the method further includes:

detecting a touch operation of a user in a human-machine interface, and obtaining a screen selection area matching the touch operation; and

obtaining a geographic position area matching the screen selection area as the information of the area to be surveyed and mapped in map data currently displayed in the human-machine interface.

Optionally, the detecting a touch operation of a user in a human-machine interface, and obtaining a screen selection area matching the touch operation, includes:

if it is detected that the touch operation of the user is a point touch operation, determining a closed area enclosed by connection lines among at least three touch points of the user as the screen selection area; and/or

if it is detected that the touch operation of the user is a box-drawing touch operation, determining the box generated by touch of the user as the screen selection area.

Optionally, before the determining, within an area to be surveyed and mapped, a plurality of combined photographing areas for surveying and mapping according to a shape and size of the combined photographing area corresponding to the combined photographing point set and a shape and size of the area to be surveyed and mapped, the method further includes:

obtaining a photographing parameter of photographing device carried by the aircraft for surveying and mapping, the photographing parameter including a single-photo photographing area of the aircraft for surveying and mapping at a set flight altitude, and each photographing point corresponding to one single-photo photographing area; and

determining the relative position relationship between the central photographing point and the four peripheral photographing points and the combined photographing area corresponding to the combined photographing point set according to the preset photo overlap degree index and the single-photo photographing area;

the determining the plurality of photographing location points as the sample points for surveying and mapping of an aircraft for surveying and mapping, includes:

determining the plurality of photographing location points as the sample points for surveying and mapping based on which the aircraft for surveying and mapping performs surveying and mapping in the area to be surveyed and mapped at the flight altitude.

Optionally, before the determining, within an area to be surveyed and mapped, a plurality of combined photographing areas for surveying and mapping according to a shape and size of the combined photographing area corresponding to the combined photographing point set and a shape and size of the area to be surveyed and mapped, the method further includes:

determining a size of a single-photo according to a frame size of the photographing device and a pixel width of the photographing device;

constructing a two-dimensional coordinate system, and selecting a target point in the two-dimensional coordinate system as a central photographing point;

generating a central photo in the two-dimensional coordinate system according to the central photographing point and the size of the single-photo;

generating four peripheral photos that meet the preset overlap degree index with the central photo in an upper left corner, a lower left corner, an upper right corner and a lower right corner of the central photo, respectively;

determining a coordinate value of the peripheral photographing point corresponding to each peripheral photo in the two-dimensional coordinate system according to a mapping relationship between the size of the single-photo and the single-photo photographing area; and

determining the relative position relationship between the central photographing point and the four peripheral photographing points according to coordinate values of the central photographing point and each peripheral photographing point in the two-dimensional coordinate system.

Optionally, before the obtaining a photographing parameter of photographing device carried by the aircraft for surveying and mapping, the method further includes:
calculating the set flight altitude according to a pixel width of the photographing device, a lens focal length of the photographing device and a ground pixel resolution.

Optionally, the obtaining a photographing parameter of photographing device carried by the aircraft for surveying and mapping, includes:
calculating the single-photo photographing area of the aircraft for surveying and mapping at the set flight altitude according to a pixel width of the photographing device, a frame area of the photographing device and a ground pixel resolution.

Optionally, after the determining the plurality of photographing location points as the sample points for surveying and mapping based on which the aircraft for surveying and mapping performs surveying and mapping in the area to be surveyed and mapped at the flight altitude, the method further includes:

sending each of the sample points for surveying and mapping to the aircraft for surveying and mapping, so that when the aircraft for surveying and mapping flies to each of the sample points for surveying and mapping according to the flight altitude, a surveying and mapping photo collection corresponding to the area to be surveyed and mapped is captured; and

setting each photo in the surveying and mapping photo collection to be synthesized into a surveying and mapping image matching the area to be surveyed and mapped.

The invention further provides a control terminal, including:

one or more processors; and
a storage apparatus, configured to store one or more programs.

When the one or more programs are executed by the one or more processors, the one or more processors perform a method for planning sample points for surveying and mapping provided by any one of embodiments of the present disclosure.

Embodiments of the present disclosure further provide a computer readable storage medium storing a computer program. When the computer program is executed by a processor, a method for planning sample points for surveying and mapping provided by any one of embodiments of the present disclosure is implemented.

BRIEF DESCRIPTION OF DRAWINGS

FIG. 1a is a schematic flowchart of a method for planning sample points for surveying and mapping provided by a first embodiment of the present disclosure.

FIG. 1b is a schematic diagram of a position distribution of each photographing point in a combined photographing point set provided by the first embodiment of the present disclosure.

FIG. 2a is a schematic flowchart of a method for planning sample points for surveying and mapping provided by a second embodiment of the present disclosure.

FIG. 2b is a schematic diagram of a distribution of each photographing location point provided by the second embodiment of the present disclosure.

FIG. 3 is a schematic diagram of an apparatus for planning sample points for surveying and mapping provided by a third embodiment of the present disclosure.

FIG. 4 is a schematic structural diagram of a control terminal for controlling an unmanned aerial vehicle provided by a fourth embodiment of the present disclosure.

DETAILED DESCRIPTION OF THE EMBODIMENTS

The present disclosure will be further described in detail below with reference to accompanying drawings and embodiments. It can be understood that the embodiments described herein are merely intended to explain the present disclosure and are not intended to limit the present disclosure.

Only some, but not all, of the contents related to the present disclosure are shown in the drawings for ease of description. It should be noted, prior to a more detailed discussion of exemplary embodiments, that some exemplary embodiments are described as processes or methods which are depicted as flowcharts.

First Embodiment

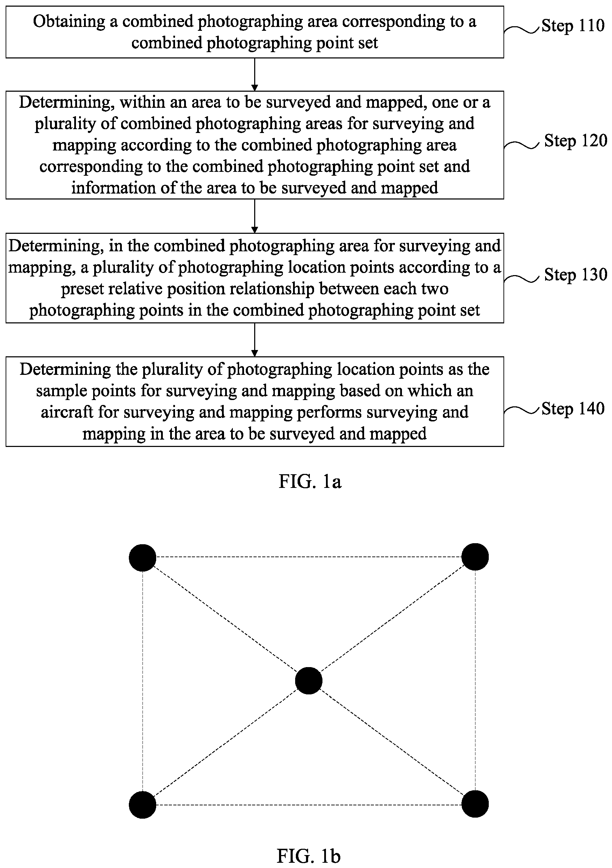

FIG. 1a is a schematic flowchart of a method for planning sample points for surveying and mapping provided by a first embodiment of the present disclosure. The embodiment is applicable to a case of obtaining efficiently each of sample points for surveying and mapping in an area to be surveyed and mapped. The method may be executed by an apparatus for planning sample points for surveying and mapping, and the apparatus may be implemented by means of software and/or hardware, and may generally be integrated in a control device (for example, an UAV controller) and used in cooperation with an unmanned aerial vehicle for surveying and mapping that is responsible for aerial photographing. Correspondingly, as shown in FIG.1a, the method includes the following operations.

Step 110: obtaining a combined photographing area corresponding to a combined photographing point set.

The combined photographing point set may be a set of preset photographing points according to a preset distribution rule, and the set may include a plurality of photographing points, and there may be a relative direction and a relative position relationship between each two photographing points. For example, the combined photographing point set includes five photographing points, which are located at the center and four vertices of a rectangle, respectively. The relative distance between the center and each vertex is 100nm. For another example, four vertices are located respectively in four directions of east, south, west and north. The combined photographing area may be an area synthesized by photos taken at each photographing point in the combined photographing point set. Namely, the combined photographing area may be an overall photographing area captured by the combined photographing point set.

In other words, the relative position relationship between each two photographing points in the combined photographing point set is determined, but each photographing point is not established a corresponding relationship with actual geographic position information, so that each photographing point cannot be directly mapped to an actual area to be surveyed and mapped. As long as one photographing point in the combined photographing point set is endowed with actual geographic position information, geographic position information of all photographing points in the combined photographing point set may be determined.

In the embodiment of the present disclosure, before the sample points for surveying and mapping of an aircraft for surveying and mapping are determined, the combined photographing area corresponding to the combined photographing point set is obtained at first, so that the sample points for surveying and mapping based on which an aircraft for surveying and mapping performs surveying and mapping in the area to be surveyed and mapped is determined by utilizing the combined photographing area. The aircraft for surveying and mapping may be any device that performs aerial surveying and mapping, such as an UAV

In an optional embodiment of the present disclosure, there is an overlapping area among a plurality of photos taken at a plurality of photographing points in the combined photographing point set.

In the embodiment of the present disclosure, in order to enable photos obtained by the aircraft for surveying and mapping to be stitched to form a complete image of the area to be surveyed and mapped, optionally, there should be an overlapping area among a plurality of photos taken at a plurality of photographing points in the combined photographing point set. Correspondingly, after the plurality of photos are taken at the plurality of photographing points in the combined photographing point set, a complete combined area may be formed by combining and/or stitching the plurality of photos. The complete combined area may cover all of the area to be surveyed and mapped, or cover merely a part of the area to be surveyed and mapped, and the present disclosure is not limited thereto. In the embodiment of the present disclosure, the overlapping area among the plurality of photos does not mean that there is an overlapping area between every two consecutive photos.

FIG. 1b is a schematic diagram of a position distribution of each photographing point in a combined photographing point set provided by the first embodiment of the present disclosure. In an optional embodiment of the present disclosure, as shown in FIG. 1b, photographing points in the combined photographing point set include a central photographing point and four peripheral photographing points, and four peripheral photographing points are four vertices of a rectangle centered on the central photographing point. A composite photo obtained by photographing based on all the photographing points in the combined photographing point set is of a rectangular shape.

In the embodiment of the present disclosure, optionally, as shown in FIG. 1b, the combined photographing point set may include five photographing points, which are the central photographing point and the four peripheral photographing points, respectively. The central photographing point may be a center of a rectangle; correspondingly, the four peripheral photographing points are four vertices of the rectangle corresponding to the central photographing point. There is a certain position relationship between each two photographing points, and the position relationship should is set to meet a certain condition that a complete rectangle image may be obtained when photos taken at each photographing location point determined according to each photographing point are combined. A combining process is to cover all photos according to overlapping images between each other. In other embodiments, after default mapping is completed, each auxiliary photographing point may be rotated with a reference photographing location point according to an operation of a user, or moved according to an operation of the user such as a sliding operation.

In the related arts, when points for surveying and mapping corresponding to the area to be surveyed and mapped are formed, a traversal method along parallel lines is adopted to survey and map movably in the area to be surveyed and mapped, so that it should be ensured that there is a preset overlapping degree between other photographing points located in horizontally adjacent positions and vertically adjacent positions of a photo taken at one point for surveying and mapping. As a result, one surveying and mapping photo contains a small amount of information that is different from other surveying and mapping photos. Therefore, it is necessary to take a large number of photos to complete to survey and map one area to be surveyed and mapped, and a large amount of work and time is required for synthesis and stitching of the photos in the later stage. In the embodiment, five photographing points selected in the combined photographing point set are the central photographing point and the four peripheral photographing points, and it is sufficient as long as it should be ensured that each peripheral photographing point and the central photographing point meet the above required overlap degree (for example, 60%, 70%, or the like), while each two peripheral photographing points are not required to meet such a high overlap degree therebetween, so that the total number of surveying and mapping photos that need to be taken for surveying and mapping the area to be surveyed and mapped with a fixed size is greatly reduced, and further the time and hardware cost required for synthesis or stitching of the photos in the later stage can also be greatly reduced. In particular, if a solution of the embodiment of the present disclosure is applied to a small plot, for example, when one plot may be completely covered after a plurality of photos taken at each photographing point in one combined photographing point set are combined or stitched, the solution of the embodiment of the present disclosure can be significantly superior to surveying and mapping at selected points in a traversal manner along parallel lines in related arts in terms of the number of points for surveying and mapping and the difficulty of photo stitching in the later stage.

Step 120: determining, within an area to be surveyed and mapped, one or a plurality of combined photographing areas for surveying and mapping according to the combined photographing area corresponding to the combined photographing point set and information of the area to be surveyed and mapped.

The area to be surveyed and mapped is an area with a definite range of latitude and longitude, which may be an area with any shape and any size, and the present disclosure are not limit to the shape and size of the area to be surveyed and mapped. The information of the area to be surveyed and mapped may be related information of the area to be surveyed and mapped, such as an area shape, a size or the like of the area to be surveyed and mapped. The combined photographing area for surveying and mapping may be a photographing area with the same size as the combined photographing area, and one combined photographing area for surveying and mapping corresponds to one actual photographing range within one plot, namely, the combined photographing area for surveying and mapping includes both two key messages: the area size and geographic position information of the area.

In the embodiment of the present disclosure, after the combined photographing area corresponding to a combined photographing point set is determines, one or a plurality of combined photographing areas for surveying and mapping within the area to be surveyed and mapped may be determined according to the combined photographing area and information of the area to be surveyed and mapped, such as the size of the area to be surveyed and mapped, etc. If there is one combined photographing area for surveying and mapping, the one combined photographing area for surveying and mapping can cover completely the area to be surveyed and mapped. If there are a plurality of combined photographing areas for surveying and mapping, an area combined by the plurality of combined photographing areas for surveying and mapping can cover completely the area to be surveyed and mapped. As an example, supposing the combined photographing area is a square of 10m*10m and the area to be surveyed and mapped is a rectangle of 10m*20m, at least two combined photographing areas are needed to cover completely the area to be surveyed and mapped.

In an optional embodiment of the present disclosure, before the determining, within an area to be surveyed and mapped, one or a plurality of combined photographing areas for surveying and mapping according to the combined photographing area corresponding to the combined photographing point set and information of the area to be surveyed and mapped, the method further includes: detecting a touch operation of a user in a human-machine interface, and obtaining a screen selection area matching the touch operation; and obtaining a geographic position area matching the screen selection area as the information of the area to be surveyed and mapped in map data currently displayed in the human-machine interface.

The screen selection area may be an area formed by the touch operation of the user in the human-machine interface of a control terminal for the aircraft for surveying and mapping, and it may be an area with any shape and any size (not lager than a size of a screen), and the present disclosure are not limited to the shape and size of the screen selection area.

In the embodiment of the present disclosure, the area to be surveyed and mapped may be specified and generated in real time by the user who controls the aircraft for surveying and mapping. For example, by detecting the touch operation of the user in the human-machine interface, the screen selection area matching the touch operation is obtained; and according to map data currently displayed in the human-machine interface, the geographic position area matching the screen selection area is determined, and the geographic position area is used as the information of the area to be surveyed and mapped.

In an optional embodiment of the present disclosure, the detecting a touch operation of a user in a human-machine interface, and obtaining a screen selection area matching the touch operation may include: if it is detected that the touch operation of the user is a single-point touch operation, determining a closed area enclosed by connection lines among at least three touch points of the user as the screen selection area; and/or if it is detected that the touch operation of the user is a box-drawing touch operation, determining the box generated by touch of the user as the screen selection area.

Optionally, the closed area formed by the detected single-point touch operation of the user may be determined as the screen selection area matching the touch operation. For example, the closed area enclosed by connection lines among at least three touch points of the user is determined as the screen selection area. The box generated by the box-drawing touch operation of the user may also be determined as the screen selection area.

In an optional embodiment of the present disclosure, there is an overlapping area among the plurality of combined photographing areas for surveying and mapping determined in the area to be surveyed and mapped. The combined photographing area for surveying and mapping is a photographing area formed by combining and/or stitching a plurality of photos taken at a plurality of photographing points in the combined photographing point set. Surveying and mapping information of the area to be surveyed and mapped is formed by combining and/or stitching each of the plurality of combined photographing areas for surveying and mapping.

The combined photographing area for surveying and mapping may be the photographing area formed by combining and/or stitching the plurality of photos taken at the plurality of photographing points in the combined photographing point set. Namely, the combined photographing area for surveying and mapping is consistent with the combined photographing area, but the combined photographing area does not have a corresponding relationship with the area to be surveyed and mapped. The combined photographing area for surveying and mapping may be photographing areas that are independent from each other and formed by dividing the area to be surveyed and mapped, and the shape and size of the photographing areas are the same as the shape and size of the combined photographing area. The overlapping area among the combined photographing areas for surveying and mapping may be set according to actual needs, for example, the overlapping area accounts for 30% or 50%, etc. of the combined photographing area for surveying and mapping, and the present disclosure are not limited to the value of the overlapping area among the combined photographing areas for surveying and mapping.

In order to ensure that each photo obtained by the aircraft for surveying and mapping may be synthesized to form a complete image according to overlapping parts, there should be the overlapping area among the plurality of combined photographing areas for surveying and mapping determined in the area to be surveyed and mapped. Optionally, there may be an overlapping area between every two adjacent combined photographing areas for surveying and mapping, so that the surveying information of the area to be surveyed and mapped may be formed by combining and/or stitching each of the plurality of combined photographing areas for surveying and mapping.

Step 130: determining, in the combined photographing area for surveying and mapping, a plurality of photographing location points according to a preset relative position relationship between each two photographing points in the combined photographing point set.

One of the photographing location points may be a location point in the area to be surveyed and mapped with a matched geographic position coordinate.

In the embodiment of the present disclosure, the photographing location points may be determined according to the preset relative position relationship between each two photographing points in the combined photographing point set.

Step 140: determining the plurality of photographing location points as the sample points for surveying and mapping based on which an aircraft for surveying and mapping performs surveying and mapping in the area to be surveyed and mapped.

Correspondingly, after each photographing location point is obtained, photographing location points may be determined as the sample points for surveying and mapping based on which an aircraft for surveying and mapping performs surveying and mapping in the area to be surveyed and mapped. The aircraft for surveying and mapping may perform aerial photographing according to each sample point for surveying and mapping and send photos obtained by the aerial photographing to a corresponding control terminal or a ground terminal, so that the control terminal can synthesize the obtained photos to obtain a final surveying and mapping image. Or, the unmanned aerial vehicle for surveying and mapping may implement the synthesis of multiple photos locally because the solution of the embodiment of the present disclosure can greatly reduce the number of photos for surveying and mapping to be taken.

In the embodiment of the present disclosure, by obtaining the combined photographing area corresponding to the combined photographing point set to determine one or more combined photographing areas for surveying and mapping within the area to be surveyed and mapped according to the combined photographing area and information of the area to be surveyed and mapped, and further determining the plurality of photographing location points in the combined photographing area for surveying and mapping according to the preset relative position relationship between each two photographing points in the combined photographing point set, and determining the plurality of photographing location points as the sample points for surveying and mapping based on which an aircraft for surveying and mapping performs surveying and mapping in the area to be surveyed and mapped, a new method for planning sample points for surveying and mapping is proposed, and the prior planning manner based on parallel line moving is replaced by an overall planning manner based on a plurality of points for surveying and mapping in the combined photographing point set, so that problems of high cost and low surveying efficiency existing in the prior UAV aerial surveying and mapping methods are solved, the surveying and mapping cost is reduced, and the surveying and mapping efficiency is improved.

Second embodiment

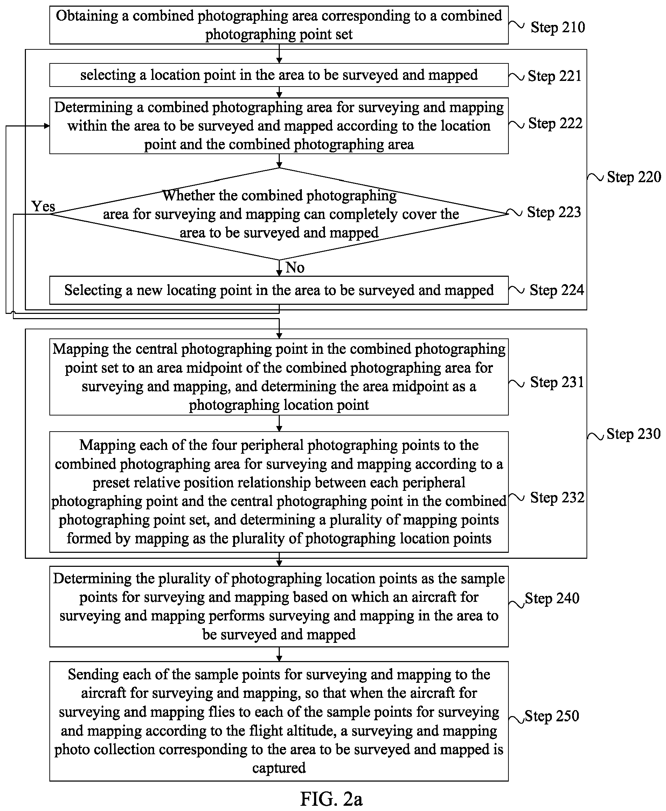

FIG. 2a is a schematic flowchart of a method for planning sample points for surveying and mapping provided by a second embodiment of the present disclosure. The embodiment is described in detail on the basis of above embodiments. In the embodiment, a implemented manner is given for determining one or a plurality of combined photographing areas for surveying and mapping within an area to be surveyed and mapped according to a combined photographing area corresponding to a combined photographing point set and information of the area to be surveyed and mapped and determining a plurality of photographing location points in the combined photographing area for surveying and mapping according to a preset relative position relationship between each two photographing points in the combined photographing point set. Correspondingly, as shown in FIG. 2a, the method of the embodiment may include the following steps.

Step 210: obtaining a combined photographing area corresponding to a combined photographing point set.

Step 220: determining one or a plurality of combined photographing areas for surveying and mapping within an area to be surveyed and mapped according to the combined photographing area corresponding to the combined photographing point set and information of the area to be surveyed and mapped.

In an optional embodiment of the present disclosure, before the determining, within an area to be surveyed and mapped, one or a plurality of combined photographing areas for surveying and mapping according to the combined photographing area corresponding to the combined photographing point set and information of the area to be surveyed and mapped, the method further includes: obtaining a photographing parameter of a photographing device carried by the aircraft for surveying and mapping, the photographing parameter including a single-photo photographing area of the aircraft for surveying and mapping at a set flight altitude, and each photographing point corresponding to one single-photo photographing area; and determining the preset relative position relationship between each two photographing points in the combined photographing point set and the combined photographing area corresponding to the combined photographing point set according to a preset photo overlap degree index and the single-photo photographing area.

The single-photo photographing area is an actual area to be surveyed and mapped captured by single photo. The photo overlap degree index may be set according to actual needs, such as 50%, 60% or 70% or so on. Although the embodiment of the present disclosure is not limited to the value of the photo overlap degree index, the photo overlap degree index should meet that a complete rectangle enables to be formed by combining all photos according to overlapping parts.

In the embodiment of the present disclosure, before planning each sample point for surveying and mapping in a plot to be surveyed and mapped, the photographing parameter of photographing device carried by the aircraft for surveying and mapping is obtained at first, namely, the single-photo photographing area of the aircraft for surveying and mapping at a set flight altitude is obtained. It should be understood that sizes of the areas to be surveyed and mapped that can be covered by the single-photo photographing area of the aircraft for surveying and mapping at different flight altitudes are different. After determining the single-photo photographing area of the aircraft for surveying and mapping at the set flight altitude, the preset relative position relationship between each two photographing points in the combined photographing point set and the combined photographing area corresponding to the combined photographing point set may be determined according to the preset photo overlap degree index and a size of the single-photo photographing area. In the combined photographing point set, each photographing point corresponds to one single-photo photographing area, for example, the photographing point is a midpoint or any one of vertices of the single-photo photographing area.

In an optional embodiment of the present disclosure, the obtaining a photographing parameter of a photographing device carried by an aircraft for surveying and mapping may include: calculating the single-photo photographing area of the aircraft for surveying and mapping at the set flight altitude according to a pixel width of the photographing device, a frame size of the photographing device, and a ground pixel resolution..

In the embodiment of the present disclosure, further, the single-photo photographing area of an unmanned aerial vehicle for surveying and mapping at the set flight altitude may be calculated according to the pixel width of the photographing device, the frame size of the photographing device, and the ground pixel resolution. Optionally, the single-photo photographing area = the ground pixel resolution * the frame size, and the ground pixel resolution = the flight altitude * the pixel width / a lens focal length.

Namely, a single-photo photographing length = the ground pixel resolution * a frame length, and a single-photo photographing width = the ground pixel resolution * a frame width. For example, the frame size is 3456*4608, the ground pixel resolution is 0.05 m, so that the single-photo photographing area is 172.8m * 230.4m.

In an optional embodiment of the present disclosure, before the obtaining a photographing parameter of a photographing device carried by the aircraft for surveying and mapping, the method may further include: calculating the set flight altitude according to a pixel width of the photographing device, a lens focal length of the photographing device, and a ground pixel resolution.

It can be understood that when the photographing device such as a camera of the aircraft for surveying and mapping has fixed photographing parameters, the flight altitude of the aircraft for surveying and mapping directly influences the ground pixel resolution. In turn, the ground pixel resolution directly determines an area of the area to be surveyed and mapped covered by the single photo. Therefore, before obtaining the photographing parameter of the photographing device carried by the aircraft for surveying and mapping, the set flight altitude of the aircraft for surveying and mapping should be determined at first. The set flight altitude of the aircraft for surveying and mapping may be calculated according to the pixel width of the photographing device, the lens focal length of the photographing device, and the ground pixel resolution. Optionally, a formula where the flight altitude = the ground pixel resolution * the lens focal length / the pixel width may be obtained from a formula where the ground pixel resolution = the flight altitude * the pixel width / the lens focal length. The pixel width = a width dimension of a sensor of the photographing device / a frame width.

In an optional embodiment of the present disclosure, before the determining, within an area to be surveyed and mapped, one or a plurality of combined photographing areas for surveying and mapping according to the combined photographing area corresponding to the combined photographing point set and information of the area to be surveyed and mapped, the method further includes:

determining a size of a single-photo according to a frame size of the photographing device and the pixel width of the photographing device;
constructing a two-dimensional coordinate system, and selecting a target point in the two-dimensional coordinate system as a central photographing point;
generating a central photo in the two-dimensional coordinate system according to the central photographing point and the size of the single-photo;
generating four peripheral photos that meet a single-photo overlap degree index with the central photo in an upper left corner, a lower left corner, an upper right corner, and a lower right corner of the central photo, respectively;

determining a coordinate value of the peripheral photographing point corresponding to each peripheral photo in the two-dimensional coordinate system according to a mapping relationship between the size of the single-photo and the single-photo photographing area; and

determining the preset relative position relationship between each two photographing points in the combined photographing point set according to coordinate values of the central photographing point and each peripheral photographing point in the two-dimensional coordinate system.

The target point may be any point in the two-dimensional coordinate system, for example, the target point may be an original point in the two-dimensional coordinate system.

Optionally, when the preset relative position relationship between each two photographing points in the combined photographing point set is determined, the size of the single-photo may be determined firstly according to the frame size of the photographing device and the pixel width of the photographing device. The size of the single-photo = the frame size * the pixel width (namely, a length of the single-photo = a frame length * the pixel width; a width of the single-photo = a frame width * the pixel width). Then, the target point in the two-dimensional coordinate system is selected as the central photographing point in the combined photographing point set. Further, the central photo is generated in the two-dimensional coordinate system according to the central photographing point and the size of the single-photo. For example, the central photographing point is determined as center of the central photo, and the central photo is generated according to the size of the single-photo. Then, four peripheral photos matching with the central photo are generated in four directions including the upper left corner, the lower left corner, the upper right corner and the lower right corner of the central photo according to the size of the single-photo and the photo overlap degree index, respectively. The central photo and the four peripheral photos matching therewith are not photos taken in real sense, but are a rectangle area with a same size and shape as the single-photo. Correspondingly, after obtaining the central photo and the four peripheral photos matching therewith, the coordinate value of the peripheral photographing point corresponding to each peripheral photo in the two-dimensional coordinate system may be determined according to the mapping relationship between the size of the single-photo and the single-photo photographing area. For example, if the size of the single-photo is 10cm* 10cm, the photo overlap degree index is 50%, the peripheral photos corresponding to the upper left corner, the lower left corner, the upper right corner and the lower right corner respectively correspond to the single-photo photographing area at the upper left corner, the lower left corner, the upper right corner and the lower right corner, and the mapping relation between the size of the single-photo and the single-photo photographing area is 1:200, then, the single-photo photographing area is correspondingly 20m*20m. If central points of the peripheral photos are determined as each peripheral photographing point, an original point of the coordinate is adopted as the central photographing point, so that coordinate values of each of peripheral photographing points may be (-10, 10), (-10, -10), (10, 10), and (10, -10), respectively, in unit of m. Correspondingly, after the coordinate values of each of the peripheral photographing points are obtained, the preset relative position relationship between each two photographing points in the combined photographing point set may be determined according to the coordinate values of the central photographing point and each peripheral photographing point in the two-dimensional coordinate system. For example, in the above example, there is a relative distance of 20m between the peripheral photographing points located at each vertex in the combined photographing point set, and there is a relative distance of $10\sqrt{2}$ m between the central photographing point at the central point and the peripheral photographing point.

Correspondingly, the step 220 may include the following operations.

Step 221: selecting a locating point in the area to be surveyed and mapped.

The locating point may be a location point in the area to be surveyed and mapped, which is configured to locate the combined photographing area for surveying and mapping in the area to be surveyed and mapped.

In the embodiment of the present disclosure, the locating point may be a location point selected in the area to be surveyed and mapped according to actual needs, such as a corner point, a center point, or the like of the area to be surveyed and mapped.

Step 222: determining a combined photographing area for surveying and mapping within the area to be surveyed and mapped according to the locating point and the combined photographing area.

In the embodiment of the present disclosure, one combined photographing area for surveying and mapping may be determined by one locating point in the area to be surveyed and mapped firstly. For example, if the shape of the area to be surveyed and mapped is rectangle, a vertex of an upper left corner in the area to be surveyed and mapped may be selected as the locating point, and a vertex of an upper left corner in the combined photographing area is overlapped with the locating point, so that a combined photographing area for surveying and mapping corresponding to the combined photographing area is formed in the area to be surveyed and mapped. It is necessary to ensure that the combined photographing area for surveying and mapping can cover maximally the area to be surveyed and mapped when one combined photographing area for surveying and mapping is determined in the area to be surveyed and mapped by utilizing the locating point and the combined photographing area.

Step 223: judging whether the combined photographing area for surveying and mapping can completely cover the area to be surveyed and mapped, if yes, executing the step 230; otherwise executing the step 224.

Corresponding, after determining one combined photographing area for surveying and mapping in the area to be surveyed and mapped by utilizing the locating point and the combined photographing area, it could be judged whether the determined combined photographing area for surveying and mapping can completely cover the area to be surveyed and mapped, and if the combined photographing area for surveying and mapping determined can completely cover the area to be surveyed and mapped, there is no need to determine other combined photographing area for surveying and mapping.

Step 224: selecting a new locating point in the area to be surveyed and mapped, and returning to execute the step 222.

Corresponding, if the combined photographing area for surveying and mapping fails to completely cover the area to be surveyed and mapped, the new locating point should be selected in the area to be surveyed and mapped, and an operation of determining a combined photographing area for surveying and mapping within the area to be surveyed and mapped according to the locating point and the combined photographing area is returned to execute, until all combined photographing areas for surveying and mapping that completely cover the area to be surveyed and mapped are determined.

When the new locating point is selected, it should be noted that there is an overlapping area between the combined photographing area for surveying and mapping determined by the new locating point and an adjacent combined photographing area for surveying and mapping.

Step 230: determining a plurality of photographing location points in the combined photographing area for surveying and mapping according to a preset relative position relationship between each two photographing points in the combined photographing point set.

Corresponding, the step 230 may include the following operations.

Step 231: mapping the central photographing point in the combined photographing point set to an area midpoint of the combined photographing area for surveying and mapping, and determining the area midpoint as a photographing location point.

In the embodiment of the present disclosure, one combined photographing area for surveying and mapping corresponds to one combined photographing area, so that when the photographing location point is determined, each photographing point in the combined photographing point set corresponding to the combined photographing area may be mapped to the combined photographing area for surveying and mapping to determine as the photographing location point. Optionally, during mapping, the central photographing point in the combined photographing point set may be mapped to the area midpoint of the combined photographing area for surveying and mapping firstly, and then the area midpoint of the combined photographing area for surveying and mapping is determined as the photographing location point.

Step 232: mapping each of the four peripheral photographing points to the combined photographing area for surveying and mapping according to a preset relative position relationship between each peripheral photographing point and the central photographing point in the combined photographing point set, and determining a plurality of mapping points formed by mapping as the plurality of photographing location points.

Further, after the area midpoint of the combined photographing area for surveying and mapping is determined as the photographing location point, each of the four peripheral photographing points may be mapped to the combined photographing area for surveying and mapping according to the relative position relationship between each peripheral photographing point and the central photographing point in the combined photographing point set, and the plurality of mapping points formed by mapping are determined as the plurality of photographing location points.

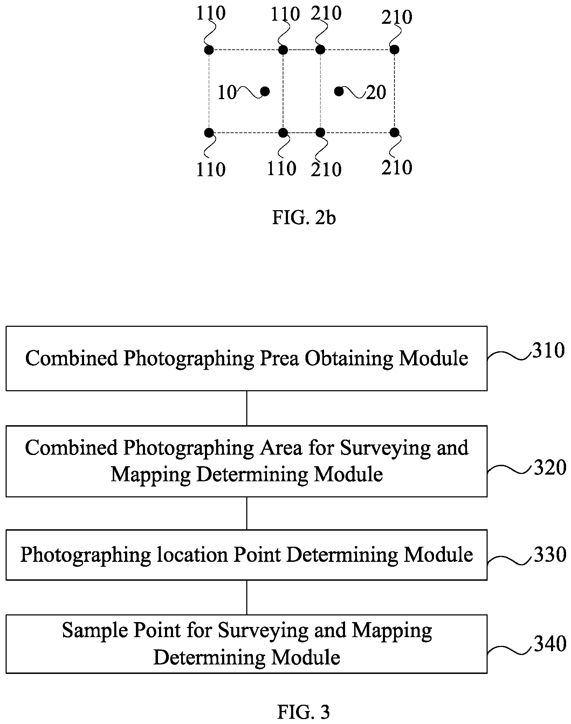

FIG. 2b is a schematic diagram of a distribution of each photographing location point provided by the second embodiment of the present disclosure. In an optional example, as show in FIG. 2b, a midpoint 10 and a midpoint 20 are area midpoints of combined photographing areas for surveying and mapping, respectively. Correspondingly, the area midpoint 10 and four peripheral photographing location points 110 forms one combined photographing area for surveying and mapping, and the area midpoint 20 and four peripheral photographing location points 210 forms one combined photographing area for surveying and mapping. A relative position relationship between area midpoints and peripheral photographing location points in two combined photographing areas for surveying and mapping is same as a preset relative position relationship between each peripheral photographing point and a central photographing point in a combined photographing point set.

Step 240: determining the plurality of photographing location points as the sample points for surveying and mapping based on which an aircraft for surveying and mapping performs surveying and mapping in the area to be surveyed and mapped.

In an optional embodiment of the present disclosure, the determining the plurality of photographing location points as the sample points for surveying and mapping based on which an aircraft for surveying and mapping performs surveying and mapping in the area to be surveyed and mapped, includes: determining the plurality of photographing location points as the sample points for surveying and mapping based on which an aircraft for surveying and mapping performs surveying and mapping in the area to be surveyed and mapped at the flight altitude.

Correspondingly, in the embodiment of the present disclosure, the plurality of photographing location points may be determined as the sample points for surveying and mapping based on which an aircraft for surveying and mapping performs surveying and mapping in the area to be surveyed and mapped at a preset flight altitude, so as to ensure that the single-photo photographing area surveyed and mapped by the aircraft for surveying and mapping at the preset flight altitude meets needs of photographing and combining photos.

Step 250: sending each of the sample points for surveying and mapping to the aircraft for surveying and mapping, so that when the aircraft for surveying and mapping flies to each of the sample points for surveying and mapping according to the flight altitude, a surveying and mapping photo collection corresponding to the area to be surveyed and mapped is captured.

Each photo of the surveying and mapping photo collection is set to be synthesized into a surveying and mapping image matching the area to be surveyed and mapped.

Correspondingly, in the embodiment of the present disclosure, a control terminal may send obtained sample points for surveying and mapping to the aircraft for surveying and mapping, and the aircraft for surveying and mapping may fly to each sample point for surveying and mapping according to the preset flight altitude to take a photo for the area to be surveyed and mapped, so that the surveying and mapping photo collection is obtained. Photos of the surveying and mapping photo collection may be synthesized into a surveying and mapping image matching the area to be surveyed and mapped.

With technical solutions described above, by determining one or a plurality of combined photographing areas for surveying and mapping within the area to be surveyed and mapped according to the combined photographing area corresponding to the combined photographing point set and the information of the area to be surveyed and mapped, and determining the plurality of photographing location points in the combined photographing area for surveying and mapping according to the preset relative position relationship between each two photographing points in the combined photographing point set, and determining the plurality of photographing location points as the sample points for surveying and mapping based on which an aircraft for surveying and mapping performs surveying and mapping in the area to be surveyed and mapped at the set flight altitude, and obtaining the surveying and mapping photo collection corresponding to the area to be surveyed and mapped according to the determined sample points for surveying and mapping by utilizing the aircraft for surveying and mapping to combine the surveying and mapping image matching the area to be surveyed and mapped, problems of high cost and low surveying and mapping efficiency existing in the prior UAV aerial surveying and mapping methods are solved, the surveying and mapping cost is reduced, and the surveying and mapping efficiency is improved.

Third embodiment

FIG. 3 is a schematic diagram of an apparatus for planning sample points for surveying and mapping provided by a third embodiment of the present disclosure. As shown in FIG. 3, the apparatus includes a combined photographing area obtaining module 310, a combined photographing area for surveying and mapping determining module 320, a photographing location point determining module 330 and a sample point for surveying and mapping determining module 340.

The combined photographing area obtaining module 310 is configured to obtain a combined photographing area corresponding to a combined photographing point set.

The combined photographing area for surveying and mapping determining module 320 is configured to determine, within an area to be surveyed and mapped, one or a plurality of combined photographing areas for surveying and mapping according to the combined photographing area corresponding to the combined photographing point set and information of the area to be surveyed and mapped.

The photographing location point determining module 330 is configured to determine, in the combined photographing area for surveying and mapping, a plurality of photographing location points according to a preset relative position relationship between each two photographing points in the combined photographing point set.

The sample point for surveying and mapping determining module 340 is configured to determine the plurality of photographing location points as the sample points for surveying and mapping based on which an aircraft for surveying and mapping performs surveying and mapping in the area to be surveyed and mapped.

In the embodiment of the present disclosure, by obtaining the combined photographing area corresponding to the combined photographing point set to determine one or a plurality of combined photographing areas for surveying and mapping within the area to be surveyed and mapped according to the combined photographing area and information of the area to be surveyed and mapped, and determining the plurality of photographing location points in the combined photographing area for surveying and mapping according to the preset relative position relationship between each two photographing points in the combined photographing point set, and determining the plurality of photographing location points as the sample points for surveying and mapping based on which an aircraft for surveying and mapping performs surveying and mapping in the area to be surveyed and mapped, a new method for planning sample points for surveying and mapping is proposed, and the prior planning manner based on parallel line moving is replaced by an overall planning manner based on a plurality of points for surveying and mapping in the combined photographing point set, so that problems of high cost and low surveying and mapping efficiency existing in the prior UAV aerial surveying and mapping methods are solved, the surveying and mapping cost is reduced, and the surveying and mapping efficiency is improved.

Optionally, there is an overlapping area among a plurality of photos taken at a plurality of photographing points in the combined photographing point set.

Optionally, there is an overlapping area among the plurality of combined photographing areas for surveying and mapping determined in the area to be surveyed and mapped. The combined photographing area for surveying and mapping is a photographing area formed by combining and/or stitching a plurality of photos taken at a plurality of photographing points in the combined photographing point set; and surveying and mapping information of the area to be surveyed and mapped is formed by combining and/or stitching each of the plurality of combined photographing areas for surveying and mapping.

Optionally, photographing points in the combined photographing point set include a central photographing point and four peripheral photographing points, and the four peripheral photographing points are four vertices of a rectangle centered on the central photographing point; and a composite photo obtained by photographing based on all the photographing points in the combined photographing point set is of a rectangular shape.

Optionally, the combined photographing area for surveying and mapping determining module 320 includes a locating point selecting unit, a first combined photographing area for surveying and mapping determining unit, and a second combined photographing area for surveying and mapping determining unit. The locating point selecting unit is configured to select a locating point in the area to be surveyed and mapped. The first combined photographing area for surveying and mapping determining unit, configured to determine a combined photographing area for surveying and mapping within the area to be surveyed and mapped according to the locating point and the combined photographing area. The second combined photographing area for surveying and mapping determining unit is configured to, if the combined photographing area for surveying and mapping fails to completely cover the area to be surveyed and mapped, select a new locating point in the area to be surveyed and mapped, and return to execute an operation of determining a combined photographing area for surveying and mapping within the area to be surveyed and mapped according to the locating point and the combined photographing area, until all combined photographing areas for surveying and mapping that completely cover the area to be surveyed and mapped are determined.

Optionally, the photographing location point determining module 330 includes a first photographing location point determining unit and a second photographing location point determining unit. The first photographing location point determining unit is configured to map the central photographing point in the combined photographing point set to an area midpoint of the combined photographing area for surveying and mapping, and determine the area midpoint as a photographing location point. The second photographing location point determining unit is configured to map each of the four peripheral photographing points to the combined photographing area for surveying and mapping according to a relative position relationship between each peripheral photographing point and the central photographing point in the combined photographing point set, and determine a plurality of mapping points formed by mapping as the plurality of photographing location points.

Optionally, the apparatus further includes a screen selection area obtaining module and a module for obtaining information of an area to be surveyed and mapped. The screen selection area obtaining module is configured to detect a touch operation of a user in a human-machine interface, and obtain a screen selection area matching the touch operation. The module for obtaining information of an area to be surveyed and mapped is configured to obtain a geographic position area matching the screen selection area as the information of the area to be surveyed and mapped in map data currently displayed in the human-machine interface.

Optionally, the screen selection area obtaining module is configured to determine a closed area enclosed by connection lines among at least three touch points of the user as the screen selection area if it is detected that the touch operation of the user is a single-point touch operation; and/or
determine the box generated by touch of the user as the screen selection area if it is detected that the touch operation of the user is a box-drawing touch operation.

Optionally, the apparatus further includes a photographing parameter obtaining module and a combined photographing area determining module. The photographing parameter obtaining module is configured to obtain a photographing parameter of a photographing device carried by the aircraft for surveying and mapping, and the photographing parameter includes a single-photo photographing area of the aircraft for surveying and mapping at a set flight altitude, and each photographing point corresponding to one single-photo photographing area. The combined photographing area determining module is configured to determine the relative position relationship between each two photographing points in the combined photographing point set and the combined photographing area corresponding to the combined photographing point set according to a preset photo overlap degree index and the single-photo photographing area. The sample point for surveying and mapping determining module 340 is configured to determine the plurality of photographing location points as the sample points for surveying and mapping based on which an aircraft for surveying and mapping performs surveying and mapping in the area to be surveyed and mapped at the flight altitude.

Optionally, the apparatus further includes a single-photo size determining module, a central photographing point determining module, a central photo generating module, a peripheral photo generating module, a coordinate value determining module and a relative position relationship determining module. The single-photo dimension determining module is configured to determine a size of a single-photo according to a frame size of the photographing device and a pixel width of the photographing device. The central photographing point determining module is configured to construct a two-dimensional coordinate system, and select a target point in the two-dimensional coordinate system as a central photographing point. The central photo generating module is configured to generate a central photo in the two-dimensional coordinate system according to the central photographing point and the size of the single-photo. The peripheral photo generating module is configured to generate four peripheral photos that meet a single-photo overlap degree index with the central photo in an upper left corner, a lower left corner, an upper right corner, and a lower right corner of the central photo, respectively. The coordinate value determining module is configured to determine a coordinate value of the peripheral photographing point corresponding to each peripheral photo in the two-dimensional coordinate system according to a mapping relationship between the size of the single-photo and the single-photo photographing area. The relative position relationship determining module is configured to determine the relative position relationship between each two photographing points in the combined photographing point set according to coordinate values of the central photographing point and each peripheral photographing point in the two-dimensional coordinate system.

Optionally, the apparatus further includes a set flight altitude calculating module, configured to calculate the set flight altitude according to a pixel width of the photographing device, a lens focal length of the photographing device and a ground pixel resolution.

Optionally, the photographing parameter obtaining module is configured to calculate the single-photo photographing area of the aircraft for surveying and mapping at the set flight altitude according to a pixel width of the photographing device, a frame area of the photographing device and a ground pixel resolution.

Optionally, the apparatus further includes a surveying and mapping photo collection obtaining module, configured to send each of the sample points for surveying and mapping to the aircraft for surveying and mapping, so that when the aircraft for surveying and mapping flies to each of the sample points for surveying and mapping according to the flight altitude, a surveying and mapping photo collection corresponding to the area to be surveyed and mapped is captured, and each photo in the surveying and mapping photo collection is configured to be synthesized into a surveying and mapping image matching the area to be surveyed and mapped.

The apparatus for planning sample points for surveying and mapping described above may execute a method for planning sample points for surveying and mapping provided by any embodiment of the present disclosure, and the apparatus has functional modules and advantageous effects corresponding to the executed method. For technical details that are not described in detail in the embodiments, it may refer to the method for planning sample points for surveying and mapping provided by any embodiment of the present disclosure.

Fourth embodiment

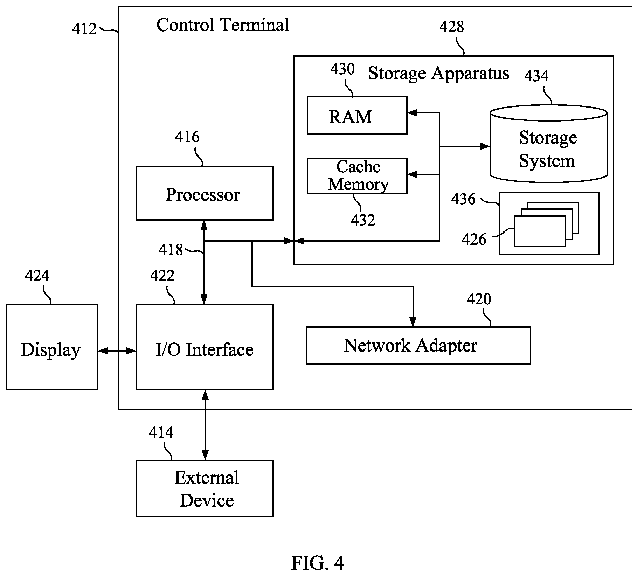

FIG. 4 is a schematic structural diagram of a control terminal for controlling an unmanned aerial vehicle provided by a fourth embodiment of the present disclosure. FIG. 4 shows a block diagram of the control terminal 412 suitable for implementing embodiments of the present disclosure. The control terminal 412 shown in FIG. 4 is merely an example, and it should not be intended to limit functions and applicable scopes of the embodiments of the present disclosure.

As shown in FIG. 4, the control terminal 412 is represented as general-purpose computing device. Components of the control terminal 412 may include, but are not limited to, one or more processors 416, a storage apparatus 428, and a bus 418 that couples different system components (including the storage apparatus 428 and the one or more processors 416).

The bus 418 refers to one or more kinds of bus architectures, including a memory bus or a memory controller, a peripheral bus, an accelerated graphics port, a processor, or local bus using any bus architecture of various kinds of the bus architectures. For example, these architectures include, but are not limited to, an Industry Standard Architecture (ISA) bus, a Micro Channel Architecture (MCA) bus, an enhanced ISA bus, a Video Electronics Standards Association (VESA) local bus, and a Peripheral Component Interconnect (PCI) bus.

Typically, the control terminal 412 includes various kinds of computer system readable medium. These medium may be any available medium that are accessible by the control terminal 412. These medium include volatile and non-volatile medium, and removable and non-removable medium.

The storage apparatus 428 may include computer system readable medium in the form of volatile memory, such as a Random Access Memory (RAM) 430 and/or a cache memory 432. The control terminal 412 may further include other removable and non-removable, and volatile and non-volatile computer system storage medium. For example, a storage system 434 may be provided for reading from and writing to a non-removable and non-volatile magnetic medium (not shown in FIG. 4 and typically called as a "hard drive"). Although the medium is not shown in FIG. 4, a magnetic disk drive for reading from and writing to a removable and non-volatile magnetic disk (such as a "floppy disk"), and an optical disk drive for reading from and writing to a removable and non-volatile optical disk (such as a Compact Disc-Read Only Memory (CD-ROM), a Digital Video Disc-Read Only Memory (DVD-ROM) or other optical medium) may be provided. In such cases, each drive may be connected with the bus 418 by one or more data medium interfaces. The storage apparatus 428 may include at least one program product having a set (such as at least one) of program modules that are configured to execute functions of each embodiment of the present disclosure.

For example, a program 436, having a set (at least one) of the program modules 426, may be stored in the storage apparatus 428. The program modules 426 include, but are not limited to, an operating system, one or more application programs, other program modules and program data. Each or some combination of these examples may include implementation of a networking environment. Generally, the program modules 426 execute functions and/or methods of the embodiments described in the present disclosure.

The control terminal 412 may also communicate with one or more external device 414 (such as a keyboard, pointing device, a camera, a display 424 and the like), and may also communicate with one or more device that enable a user to interact with the control terminal 412, and/or any device (such as a network card, a modem, and the like) that enable the control terminal 412 to communicate with one or more other computing device. Such communication may occur via an Input/Output (I/O) interface 422. In addition, the control terminal 412 may also communicate with one or more networks (such as a Local Area Network (LAN), a Wide Area Network (WAN), and/or a public network (such as the Internet)) by a network adapter 420. As shown in the figure, the network adapter 420 communicates with the other modules of the control terminal 412 by the bus 418. It should be understood that although not shown in the figure, other hardware and/or software modules may be used in combination with the control terminal 412, which include, but are not limited to, microcode, a device driver, a redundant processing unit, an external magnetic disk drive array, a Redundant Arrays of Independent Disks (RAID) system, a magnetic tape drive, a data archival storage system, and the like.

The processor 416 executes each functional application and data processing, for example, an implementation of the method for planning sample points for surveying and mapping provided by the embodiments of the present disclosure, by running a program stored in the storage apparatus 428.

Fifth embodiment

The fifth embodiment of the present disclosure further provides a computer storage medium storing a computer program. When executed by a computer processor, the computer program executes a method for planning sample points for surveying and mapping as described in any one of the embodiments of the present disclosure.

Any combination of one or more computer readable medium may be adopted as the computer storage medium in the embodiments of the present disclosure. The computer readable medium may be a computer readable signal medium or a computer readable storage medium. The computer readable storage medium may be, for example but not limited to, one or any combination of electric, magnetic, optical, electromagnetic, infrared, and semi-conductive system, apparatus and device. More detailed examples (a non-exhaustive list) of the computer readable storage medium include: one or any suitable combination of an electrical connection having one or more wires, a portable computer magnetic disk, a hard disk, a RAM, a Read-Only Memory (ROM), an Erasable Programmable Read-Only Memory ((EPROM) or flash memory), an optical fiber, a portable Compact Disc Read-Only Memory (CD-ROM), an optical storage device, a magnetic storage device, or any suitable combination of the foregoing. In the present disclosure, the computer readable storage medium may be any tangible medium that contains or stores a program, and the program may be used by or used in combination with an instruction execution system, apparatus or device.

The computer readable signal medium may include a data signal carrying computer readable program codes therein, with the data signal propagated in base band or as part of a carrier wave. Such a propagated data signal may take any of a variety of forms, including, but not limited to, an electromagnetic signal, an optical signal, or any suitable combination thereof. The computer readable signal medium may be any computer readable medium other than the computer readable storage medium, and the computer readable medium may send, propagate, or transport a program used by or used in combination with an instruction execution system, apparatus or device.

Program code contained on the computer readable medium may be transported by using any suitable medium, including, but not limited to, wireless, electric wire, optical fiber cable, Radio Frequency (RF) and the like, or any suitable combination of the foregoing.

Computer program code for executing operations of the present disclosure may be written in one or more programming languages, or any combination thereof. The programming languages include an object-oriented programming language, such as Java, Smalltalk, C++ or the like, and a conventional procedural programming language such as the "C" language or similar programming languages. The program code may be executed entirely on a user computer, executed partly on the user computer, executed as an independent software package, executed partly on the user computer and partly on a remote computer, or executed entirely on the remote computer or a server. In a scenario involving the remote computer, the remote computer may be connected to the user computer via any kind of network including LAN or WAN, or may be connected to an external computer (for example, via the Internet utilizing an Internet Service Provider).

Industrial Applicability

In the embodiments of the present disclosure, the prior planning manner based on parallel line moving is replaced by an overall planning manner based on a plurality of points for surveying and mapping in a combined photographing point set, so that problems of high cost and low surveying and mapping efficiency existing in the prior UAV aerial surveying and mapping methods are avoided, the surveying and mapping cost is reduced, and the surveying and mapping efficiency is improved.

**Claims**

1. A method for planning sample points for surveying and mapping, comprising obtaining a combined photographing area corresponding to a combined photographing point set, wherein the combined photographing point set comprises: a central photographing point and four peripheral photographing points, and the four peripheral photographing points are four vertices of a rectangle centered on the central photographing point; the combined photographing area is an area synthesized by photos taken at the central photographing point and the four peripheral photographing points; a relative position relationship between the central photographing point and the four peripheral photographing points meets a condition as follows: a composite photo to be obtained by photographing based on the central photographing point and the four peripheral photographing points is of a rectangular shape; each photo to be obtained based on each of the four peripheral photographing points and a photo to be obtained based on the central photographing point meet a preset photo overlap degree index, the preset photo overlap degree index is configured to characterize an overlap degree between the photo to be obtained based on each of the four peripheral photographing points and the photo to be obtained based on the central photographing point; and an overlap degree between photos to be obtained based on each two peripheral photographing points is less than the preset photo overlap degree index;

determining, within an area to be surveyed and mapped, a plurality of combined photographing areas for surveying and mapping according to a shape and size of the combined photographing area corresponding to the combined photographing point set and a shape and size of the area to be surveyed and mapped, wherein the plurality of combined photographing areas for surveying and mapping are photographing areas that are independent from each other and formed by dividing the area to be surveyed and mapped according to the shape and size of the combined photographing area and the shape and size of the area to be surveyed and mapped, and a shape and size of each of the plurality of photographing areas is the same as a shape and size of the combined photographing area; determining, in each of the plurality of combined photographing areas for surveying and mapping, a plurality of photographing location points according to the relative position relationship between the central photographing point and the four peripheral photographing points, comprising: mapping the central photographing point in the combined photographing point set to an area midpoint with geographic position information and in the combined photographing area for surveying and mapping, and determining the area midpoint as a photographing location point; and mapping respectively the four peripheral photographing points to four photographing location points with geographic position information and in the combined photographing area for surveying and mapping according to the relative position relationship between the central photographing point and the four peripheral photographing points; and
determining the plurality of photographing location points as the sample points for surveying and mapping by an aircraft for surveying and mapping.

2. The method according to claim 1, wherein the method further comprises taking a plurality of photos at the central photographing point and the four peripheral photographing points in the combined photographing point set.

3. The method according to claim 1, wherein the combined photographing area for surveying and mapping is a photographing area formed by combining and/or stitching a plurality of photos taken at the central photographing point and the four peripheral photographing points in the combined photographing point set.

4. The method according to claim 1, wherein the determining, within an area to be surveyed and mapped, a plurality of combined photographing areas for surveying and mapping according to a shape and size of the combined photographing area corresponding to the combined photographing point set and a shape and size of the area to be surveyed and mapped comprises:

selecting a locating point in the area to be surveyed and mapped, wherein the locating point is configured to locate the combined photographing area for surveying and mapping in the area to be surveyed and mapped;

determining a combined photographing area for surveying and mapping within the area to be surveyed and mapped according to the locating point and the combined photographing area; and

if the combined photographing area for surveying and mapping fails to completely cover the area to be surveyed and mapped, selecting a new locating point in the area to be surveyed and mapped, and returning to execute an operation of determining a combined photographing area for surveying and mapping within the area to be surveyed and mapped according to the locating point and the combined photographing area, until all combined photographing areas for surveying and mapping that completely cover the area to be surveyed and mapped are determined.

5. The method according to claim 1, wherein before the determining, within an area to be surveyed and mapped, a plurality of combined photographing areas for surveying and mapping according to a shape and size of the combined photographing area corresponding to the combined photographing point set and a shape and size of the area to be surveyed and mapped, the method further comprises:

detecting a touch operation of a user in a human-machine interface, and obtaining a screen selection area matching the touch operation; and obtaining a geographic position area matching the screen selection area as the information of the area to be surveyed and mapped in map data currently displayed in the human-machine interface.

6. The method according to claim 5, wherein the detecting a touch operation of a user in a human-machine interface, and obtaining a screen selection area matching the touch operation comprises:

if it is detected that the touch operation of the user is a point touch operation, determining a closed area enclosed by connection lines among at least three touch points of the user as the screen selection area; and/or

if it is detected that the touch operation of the user is a box-drawing touch operation, determining the box generated by touch of the user as the screen selection area.

7. The method according to any one of claims 1 to 6, wherein before the determining, within an area to be surveyed and mapped, a plurality of combined photographing areas for surveying and mapping according to a shape and size of the combined photographing area corresponding to the combined photographing point set and a shape and size of the area to be surveyed and mapped, the method further comprises:

obtaining a photographing parameter of a photographing device carried by the aircraft for surveying and mapping, the photographing parameter comprising a single-photo photographing area of the aircraft for surveying and mapping at a set flight altitude, and each photographing point corresponding to one single-photo photographing area; and

determining the relative position relationship between the central photographing point and the four peripheral photographing points and the combined photographing area corresponding to the combined photographing point set according to the preset photo overlap degree index and the single-photo photographing area;

the determining the plurality of photographing location points as the sample points for surveying and mapping of an aircraft for surveying and mapping comprises:

determining the plurality of photographing location points as the sample points for surveying and mapping based on which the aircraft for surveying and mapping performs surveying and mapping in the area to be surveyed and mapped at the flight altitude.

8. The method according to claim 7, wherein before the determining, within an area to be surveyed and mapped, a plurality of combined photographing areas for surveying and mapping according to a shape and size of the combined photographing area corresponding to the combined photographing point set and a shape and size of the area to be surveyed and mapped, the method further comprises:

determining a size of a single-photo according to a frame size of the photographing device and a pixel width of the photographing device;

constructing a two-dimensional coordinate system, and selecting a target point in the two-dimensional coordinate system as a central photographing point;

generating a central photo in the two-dimensional coordinate system according to the central photographing point and the size of the single-photo;

generating four peripheral photos that meet the preset photo overlap degree index with the central photo in an upper left corner, a lower left corner, an upper right corner and a lower right corner of the central photo, respectively;

determining a coordinate value of the peripheral photographing point corresponding to each peripheral photo in the two-dimensional coordinate system according to a mapping relationship between the size of the single-photo and the single-photo photographing area; and

determining the relative position relationship between the central photographing point and the four peripheral photographing points according to coordinate values of the central photographing point and each peripheral photographing point in the two-dimensional coordinate system.

9. The method according to claim 7, wherein before the obtaining a photographing parameter of photographing device carried by the aircraft for surveying and mapping, the method further comprises:
calculating the set flight altitude according to a pixel width of the photographing device, a lens focal length of the photographing device and a ground pixel resolution.

10. The method according to claim 7, wherein the obtaining a photographing parameter of photographing device carried by the aircraft for surveying and mapping comprises:
calculating the single-photo photographing area of the aircraft for surveying and mapping at the set flight altitude according to a pixel width of the photographing device, a frame area of the photographing device and a ground pixel resolution.

11. The method according to claim 7, wherein after determining the plurality of photographing location points as the sample points for surveying and mapping based on which the aircraft for surveying and mapping performs surveying and mapping in the area to be surveyed and mapped at the flight altitude, the method further comprises:

sending each of the sample points for surveying and mapping to the aircraft for surveying and mapping, so that when the aircraft for surveying and mapping flies to each of the sample points for surveying and mapping according to the flight altitude, a surveying and mapping photo collection corresponding to the area to be surveyed and mapped is captured; and
setting each photo in the surveying and mapping photo collection to be synthesized into a surveying and mapping image matching the area to be surveyed and mapped.

12. A control terminal, comprising

one or more processors; and
a storage apparatus, configured to store one or more programs,
wherein when the one or more programs are executed by the one or more processors, the one or more processors perform the method for planning sample points for surveying and mapping according to any one of claims 1 to 11.

**Patentansprüche**

1. Ein Verfahren zum Planen von Probepunkten für die Vermessung und Kartierung, Folgendes beinhaltend:

Erhalten eines kombinierten Fotografierbereichs, der einem kombinierten Fotografierpunktsatz entspricht, wobei der kombinierte Fotografierpunktsatz Folgendes beinhaltet: einen zentralen Fotografierpunkt und vier periphere Fotografierpunkte, und die vier peripheren Fotografierpunkte vier Eckpunkte eines Rechtecks sind, das auf dem zentralen Fotografierpunkt zentriert ist; der kombinierte Fotografierbereich ein Bereich ist, der durch Fotos synthetisiert wird, die an dem zentralen Fotografierpunkt und den vier peripheren Fotografierpunkten aufgenommen werden; eine relative Positionsbeziehung zwischen dem zentralen Fotografierpunkt und den vier peripheren Fotografierpunkten eine Bedingung wie folgt erfüllt: ein zusammengesetztes Foto, das durch Fotografieren auf Grundlage des zentralen Fotopunkts und der vier peripheren Fotopunkte erhalten werden soll, weist eine rechteckige Form auf; jedes Foto, das auf Grundlage jedes der vier peripheren Fotopunkte erhalten werden soll, und ein Foto, das auf Grundlage des zentralen Fotopunktes erhalten werden soll, erfüllen einen voreingestellten Fotoüberlappungsgradindex, wobei der voreingestellte Fotoüberlappungsgradindex dazu konfiguriert ist, einen Überlappungsgrad zwischen dem Foto, das auf Grundlage jedes der vier peripheren Fotografierpunkte erhalten werden soll, und dem Foto, das auf Grundlage des zentralen Fotografierpunkts erhalten werden soll, zu kennzeichnen; und ein Überlappungsgrad zwischen Fotos, die auf Grundlage von jeweils zwei peripheren Fotografierpunkten erhalten werden sollen, kleiner ist als der voreingestellte Fotoüberlappungsgradindex;
Bestimmen, innerhalb eines zu vermessenden und zu kartierenden Bereichs, einer Vielzahl von kombinierten Fotografierbereichen für die Vermessung und Kartierung gemäß einer Form und Größe des kombinierten Fotografierbereichs, der dem kombinierten Fotografierpunktsatz entspricht, und einer Form und Größe des zu vermessenden und zu kartierenden Bereichs, wobei die Vielzahl von kombinierten Fotografierbereichen für die Vermessung und Kartierung Fotografierbereiche sind, die voneinander unabhängig sind und durch Unterteilen des zu vermessenden und

kartierenden Bereichs gemäß der Form und Größe des kombinierten Fotografierbereichs und der Form und Größe des zu vermessenden und kartierenden Bereichs ausgebildet werden, und eine Form und Größe jedes der Vielzahl von Fotografierbereichen dieselbe ist wie eine Form und Größe des kombinierten Fotografierbereichs;

Bestimmen, in jedem der Vielzahl von kombinierten Fotografierbereichen für die Vermessung und Kartierung, einer Vielzahl von Fotografierortspunkten gemäß der relativen Positionsbeziehung zwischen dem zentralen Fotografierpunkt und den vier peripheren Fotografierpunkten, Folgendes beinhaltend: Kartieren des zentralen Fotografierpunkts in dem kombinierten Fotografierpunktsatz auf einen Bereichsmittelpunkt mit geographischen Positionsinformationen und in dem kombinierten Fotografierbereich für die Vermessung und Kartierung, und Bestimmen des Bereichsmittelpunkts als einen Fotografierortspunkt; und Kartieren jeweils der vier peripheren Fotografierpunkte auf vier Fotografierortspunkte mit geographischen Positionsinformationen und in dem kombinierten Fotografierbereich für die Vermessung und Kartierung gemäß der relativen Positionsbeziehung zwischen dem zentralen Fotografierpunkt und den vier peripheren Fotografierpunkten; und

Bestimmen der Vielzahl von Fotografierortspunkten als die Probepunkte für die Vermessung und Kartierung durch ein Luftfahrzeug für die Vermessung und Kartierung.

2. Verfahren gemäß Anspruch 1, wobei das Verfahren ferner das Aufnehmen einer Vielzahl von Fotos an dem zentralen Fotografierpunkt und den vier peripheren Fotografierpunkten in dem kombinierten Fotografierpunktsatz beinhaltet.

3. Verfahren gemäß Anspruch 1, wobei der kombinierte Fotografierbereich für die Vermessung und Kartierung ein Fotografierbereich ist, der durch Kombinieren und/oder Zusammenfügen einer Vielzahl von Fotos ausgebildet wird, die an dem zentralen Fotografierpunkt und den vier peripheren Fotografierpunkten in dem kombinierten Fotografierpunktsatz aufgenommen wurden.

4. Verfahren gemäß Anspruch 1, wobei das Bestimmen innerhalb eines zu vermessenden und zu kartierenden Bereichs einer Vielzahl von kombinierten Fotografierbereichen für die Vermessung und Kartierung gemäß einer Form und Größe des kombinierten Fotografierbereichs, der dem kombinierten Fotografierpunktsatz entspricht, und einer Form und Größe des zu vermessenden und kartierenden Bereichs Folgendes beinhaltet:

Auswählen eines Ortungspunktes in dem zu vermessenden und zu kartierenden Bereich, wobei der Ortungspunkt dazu konfiguriert ist, den kombinierten Fotografierbereich für die Vermessung und Kartierung in dem zu vermessenden und zu kartierenden Bereich zu orten; Bestimmen eines kombinierten Fotobereichs für die Vermessung und Kartierung innerhalb des zu vermessenden und kartierenden Bereichs gemäß dem Ortungspunkt und dem kombinierten Fotografierbereich; und wenn der kombinierte Fotografierbereich für die Vermessung und Kartierung den zu vermessenden und kartierenden Bereich nicht vollständig abdeckt, Auswählen eines neuen Ortungspunktes in dem zu vermessenden und kartierenden Bereich und

Zurückkehren zu der Ausführung eines Vorgangs zum Bestimmen eines kombinierten Fotografierbereichs für die Vermessung und Kartierung innerhalb des zu vermessenden und kartierenden Bereichs gemäß dem Ortungspunkt und dem kombinierten Fotografierbereich, bis alle kombinierten Fotografierbereiche für die Vermessung und Kartierung, die den zu vermessenden und kartierenden Bereich vollständig abdecken, bestimmt sind.

5. Verfahren gemäß Anspruch 1, wobei das Verfahren vor dem Bestimmen innerhalb eines zu vermessenden und zu kartierenden Bereichs einer Vielzahl von kombinierten Fotografierbereichen für die Vermessung und Kartierung gemäß einer Form und Größe des kombinierten Fotografierbereichs, der dem kombinierten Fotografierpunktsatz entspricht, und einer Form und Größe des zu vermessenden und kartierenden Bereichs ferner Folgendes beinhaltet:

Erfassen eines Berührungsvorgangs eines Benutzers in einer Mensch-Maschine-Schnittstelle und Erhalten eines Bildschirmauswahlbereichs, der dem Berührungsvorgang entspricht; und Erhalten eines geographischen Positionsbereichs, der mit dem Bildschirmauswahlbereich übereinstimmt, als die Informationen des zu vermessenden und zu kartierenden Bereichs in den aktuell in der Mensch-Maschine-Schnittstelle angezeigten Kartendaten.

6. Verfahren gemäß Anspruch 5, wobei das Erfassen eines Berührungsvorgangs eines Benutzers in einer Mensch-Maschine-Schnittstelle und Erhalten eines Bildschirmauswahlbereichs, der dem Berührungsvorgang entspricht, Folgendes beinhaltet:
wenn erfasst wird, dass der Berührungsvorgang des Benutzers ein Punktberührungsvorgang ist, Bestimmen eines geschlossenen Bereichs, der von Verbindungslinien zwischen wenigstens drei Berührungspunkten des Benutzers eingeschlossen ist, als den Bildschirmauswahlbereich; und/oder wenn erfasst wird, dass der Berührungsvorgang des Benutzers ein kastenzeichnender Berührungsvorgang ist, Bestimmen des durch die Berührung des Benutzers erzeugten Kastens als den Bildschirmauswahlbereich.

7. Verfahren gemäß einem der Ansprüche 1 bis 6, wobei das Verfahren vor dem Bestimmen innerhalb eines zu vermessenden und zu kartierenden Bereichs einer Vielzahl von kombinierten Fotografierbereichen für die Vermessung und Kartierung gemäß einer Form und Größe des kombinierten Fotografierbereichs, der dem kombinierten Fotografierpunktsatz entspricht, und einer Form und Größe des zu vermessenden und kartierenden Bereichs ferner Folgendes beinhaltet:

Erhalten eines Fotografierparameters einer Fotografiervorrichtung, die von dem Luftfahrzeug für die Vermessung und Kartierung getragen wird, wobei der Fotografierparameter einen Einzelfoto-Fotografierbereich des Luftfahrzeugs für die Vermessung und Kartierung in einer eingestellten Flughöhe beinhaltet und jeder Fotografierpunkt einem Einzelfoto-Fotografierbereich entspricht; und
Bestimmen der relativen Positionsbeziehung zwischen dem zentralen Fotografierpunkt und den vier peripheren Fotografierpunkten und dem kombinierten Fotografierbereich, der dem kombinierten Fotografierpunkt entspricht, der gemäß dem voreingestellten Fotoüberlappungsgradindex und dem Einzelfoto-Fotobereich eingestellt ist;
das Bestimmen der Vielzahl von Fotografierortspunkten als die Probepunkte für die Vermessung und Kartierung eines Luftfahrzeugs für die Vermessung und Kartierung Folgendes beinhaltet:
Bestimmen der Vielzahl von Fotografierortspunkten als die Stichprobenpunkte für die Vermessung und Kartierung, auf deren Grundlage das Luftfahrzeug für die Vermessung und Kartierung die Vermessung und Kartierung in dem zu vermessenden und zu kartierenden Bereich in der Flughöhe durchführt.

8. Verfahren gemäß Anspruch 7, wobei das Verfahren vor dem Bestimmen innerhalb eines zu vermessenden und zu kartierenden Bereichs einer Vielzahl von kombinierten Fotografierbereichen für die Vermessung und Kartierung gemäß einer Form und Größe des kombinierten Fotografierbereichs, der dem kombinierten Fotografierpunktsatz entspricht, und einer Form und Größe des zu vermessenden und kartierenden Bereichs ferner Folgendes beinhaltet:

Bestimmen einer Größe eines Einzelfotos gemäß einer Einzelbildgröße der Fotografiervorrichtung und einer Pixelbreite der Fotografiervorrichtung;
Konstruieren eines zweidimensionalen Koordinatensystems und Auswählen eines Zielpunkts in dem zweidimensionalen Koordinatensystem als einen zentralen Fotografierpunkt;
Erzeugen eines zentralen Fotos in dem zweidimensionalen Koordinatensystem gemäß dem zentralen Fotografierpunkt und der Größe des Einzelfotos;
Erzeugen von vier peripheren Fotos, die den voreingestellten Fotoüberlappungsgradindex mit dem zentralen Foto in einer oberen linken Ecke, einer unteren linken Ecke, einer oberen rechten Ecke beziehungsweise einer unteren rechten Ecke des zentralen Fotos erfüllen;
Bestimmen eines Koordinatenwertes des peripheren Fotografierpunkts, der jedem peripheren Foto in dem zweidimensionalen Koordinatensystem entspricht, gemäß einer Kartierungsbeziehung zwischen der Größe des Einzelfotos und dem Einzelfoto-Fotografierbereich; und
Bestimmen der relativen Positionsbeziehung zwischen dem zentralen Fotografierpunkt und den vier peripheren Fotografierpunkten gemäß den Koordinatenwerten des zentralen Fotografierpunkts und jedes peripheren Fotografierpunkts in dem zweidimensionalen Koordinatensystem.

9. Verfahren gemäß Anspruch 7, wobei das Verfahren vor dem Erhalten eines Fotografierparameters der von dem Luftfahrzeug für die Vermessung und Kartierung getragenen Fotografiervorrichtung ferner Folgendes beinhaltet:
Berechnen der eingestellten Flughöhe gemäß einer Pixelbreite der Fotografiervorrichtung, einer Linsenbrennweite der Fotografiervorrichtung und einer Bodenpixelauflösung.

10. Verfahren gemäß Anspruch 7, wobei das Erhalten eines Fotografierparameters der von dem Luftfahrzeug getragenen Fotografiervorrichtung für die Vermessung und Kartierung Folgendes beinhaltet: Berechnen des Einzelfoto-Fotografierbereichs des Luftfahrzeugs für die Vermessung und Kartierung in der eingestellten Flughöhe gemäß einer Pixelbreite der Fotografiervorrichtung, einem Einzelbildbereich der Fotografiervorrichtung und einer Bodenpixelauflösung.

11. Verfahren gemäß Anspruch 7, wobei das Verfahren nach dem Bestimmen der Vielzahl von Fotografierortspunkten als die Stichprobenpunkte für die Vermessung und Kartierung, auf deren Grundlage das Luftfahrzeug für die Vermessung und Kartierung die Vermessung und Kartierung in dem zu vermessenden und zu kartierenden Bereich in der Flughöhe durchführt, ferner Folgendes beinhaltet:

Senden jedes der Probepunkte für die Vermessung und Kartierung an das Luftfahrzeug für die Vermessung und Kartierung, sodass, wenn das Luftfahrzeug für die Vermessung und Kartierung jeden der Probepunkte für die Vermessung und Kartierung gemäß der Flughöhe anfliegt, eine Vermessungs- und Kartierungsfotosammlung, die dem zu vermessenden und kartierenden Bereich entspricht, aufgenommen wird; und Einstellen jedes Fotos in der Vermessungs- und Kartierungsfotosammlung, um zu einem Vermessungs- und Kartierungsbild synthetisiert zu werden, das mit dem zu vermessenden und kartierenden Bereich übereinstimmt.

12. Ein Steuerterminal, das Folgendes beinhaltet:

einen oder mehrere Prozessoren; und eine Speichereinrichtung, die zum Speichern eines oder mehrerer Programme konfiguriert ist, wobei, wenn das eine oder die mehreren Programme von dem einen oder den mehreren Prozessoren ausgeführt werden, der eine oder die mehreren Prozessoren das Verfahren zum Planen von Probepunkten für die Vermessung und Kartierung gemäß einem der Ansprüche 1 bis 11 durchführen.

## Revendications

1. Un procédé de planification de points d'échantillonnage pour le relevé et la cartographie, comprenant :

l'obtention d'une zone de photographie combinée correspondant à un ensemble de points de photographie combinée, l'ensemble de points de photographie combinée comprenant : un point de photographie central et quatre points de photographie périphériques, et les quatre points de photographie périphériques étant quatre sommets d'un rectangle centré sur le point de photographie central ; la zone de photographie combinée étant une zone synthétisée par des photos prises au point de photographie central et aux quatre points de photographie périphériques ; une relation de position relative entre le point de photographie central et les quatre points de photographie périphériques satisfaisant une condition qui est la suivante : une photo composite devant être obtenue par photographie sur la base du point de photographie central et des quatre points de photographie périphériques est d'une forme rectangulaire ; chaque photo devant être obtenue sur la base de chacun des quatre points de photographie périphériques et une photo devant être obtenue sur la base du point de photographie central satisfaisant un indice de degré de chevauchement de photos prédéfini, l'indice de degré de chevauchement de photos prédéfini étant configuré pour caractériser un degré de chevauchement entre la photo devant être obtenue sur la base de chacun des quatre points de photographie périphériques et la photo devant être obtenue sur la base du point de photographie central ; et un degré de chevauchement entre des photos devant être obtenues sur la base de chaque paire de points de photographie périphériques étant inférieur à l'indice de degré de chevauchement de photos prédéfini ;

la détermination, à l'intérieur d'une zone devant être relevée et cartographiée, d'une pluralité de zones de photographie combinée pour le relevé et la cartographie selon une forme et une taille de la zone de photographie combinée correspondant à l'ensemble de points de photographie combinée et une forme et une taille de la zone devant être relevée et cartographiée, la pluralité de zones de photographie combinée pour le relevé et la cartographie étant des zones de photographie qui sont indépendantes les unes des autres et formées par division de la zone devant être relevée et cartographiée selon la forme et la taille de la zone de photographie combinée et la forme et la taille de la zone devant être relevée et cartographiée, et une forme et une taille de chaque zone de photographie de la pluralité de zones de photographie étant les mêmes qu'une forme et une taille de la zone de photographie combinée ;

la détermination, dans chaque zone de photographie combinée de la pluralité de zones de photographie combinée pour le relevé et la cartographie, d'une pluralité de points d'emplacement de photographie selon la relation de position relative entre le point de photographie central et les quatre points de photographie périphériques, comprenant :

l'association, au point de photographie central de l'ensemble de points de photographie combinée, d'un point milieu de zone ayant des informations de position géographique et présent dans la zone de photographie combinée pour le relevé et la cartographie, et la détermination du point milieu de zone comme point d'emplacement de photographie ; et l'association, respectivement aux quatre points de photographie périphériques, de quatre points d'emplacement de photographie ayant des informations de position géographique et présents dans la zone de photographie combinée pour le relevé et la cartographie selon la relation de position relative entre le point de photographie central et les quatre points de photographie périphériques ; et la détermination de la pluralité de points d'emplacement de photographie comme points d'échantillonnage pour le relevé et la cartographie par un aéronef pour le relevé et la cartographie.

2. Le procédé selon la revendication 1, le procédé comprenant en outre la prise d'une pluralité de photos au point de photographie central et aux quatre points de photographie périphériques de l'ensemble de points de photographie combinée.

3. Le procédé selon la revendication 1, dans lequel la zone de photographie combinée pour le relevé et la cartographie est une zone de photographie formée par combinaison et/ou assemblage d'une pluralité de photos prises au point de photographie central et aux quatre points de photographie périphériques de l'ensemble de points de photographie combinée.

4. Le procédé selon la revendication 1, dans lequel la détermination, à l'intérieur d'une zone devant être relevée et cartographiée, d'une pluralité de zones de photographie combinée pour le relevé et la cartographie selon une forme et une taille de la zone de photographie combinée correspondant à l'ensemble de points de photographie combinée et une forme et une taille de la zone devant être relevée et cartographiée comprend :

la sélection d'un point de localisation dans la zone devant être relevée et cartographiée, le point de localisation étant configuré pour localiser la zone de photographie combinée pour le relevé et la cartographie dans la zone devant être relevée et cartographiée ; la détermination d'une zone de photographie combinée pour le relevé et la cartographie à l'intérieur de la zone devant être relevée et cartographiée selon le point de localisation et la zone de photographie combinée ; et si la zone de photographie combinée pour le relevé et la cartographie ne couvre pas complètement la zone devant être relevée et cartographiée, la sélection d'un nouveau point de localisation dans la zone devant être relevée et cartographiée, et le retour à l'exécution d'une opération de détermination d'une zone de photographie combinée pour le relevé et la cartographie à l'intérieur de la zone devant être relevée et cartographiée selon le point de localisation et la zone de photographie combinée, jusqu'à ce que toutes les zones de photographie combinée pour le relevé et la cartographie qui couvrent complètement la zone devant être relevée et cartographiée soient déterminées.

5. Le procédé selon la revendication 1, le procédé comprenant en outre, avant la détermination, à l'intérieur d'une zone devant être relevée et cartographiée, d'une pluralité de zones de photographie combinée pour le relevé et la cartographie selon une forme et une taille de la zone de photographie combinée correspondant à l'ensemble de points de photographie combinée et une forme et une taille de la zone devant être relevée et cartographiée :

la détection d'une opération de toucher d'un utilisateur dans une interface homme-machine, et l'obtention d'une zone de sélection à l'écran concordant avec l'opération de toucher ; et l'obtention d'une zone de position géographique concordant avec la zone de sélection à l'écran comme informations de la zone devant être relevée et cartographiée dans des données cartographiques actuellement affichées dans l'interface homme-machine.

6. Le procédé selon la revendication 5, dans lequel la détection d'une opération de toucher d'un utilisateur dans une interface homme-machine et l'obtention d'une zone de sélection à l'écran concordant avec l'opération de toucher comprennent :

s'il est détecté que l'opération de toucher de l'utilisateur est une opération de toucher de points, la détermination d'une zone fermée entourée par des lignes de liaison entre au moins trois points de toucher de l'utilisateur comme zone de sélection à l'écran ; et/ou s'il est détecté que l'opération de toucher de l'utilisateur est une opération de toucher de tracé de cadre, la détermination du cadre généré par le toucher de l'utilisateur comme zone de sélection à l'écran.

**7.** Le procédé selon l'une quelconque des revendications 1 à 6, le procédé comprenant en outre, avant la détermination, à l'intérieur d'une zone devant être relevée et cartographiée, d'une pluralité de zones de photographie combinée pour le relevé et la cartographie selon une forme et une taille de la zone de photographie combinée correspondant à l'ensemble de points de photographie combinée et une forme et une taille de la zone devant être relevée et cartographiée :

l'obtention d'un paramètre de photographie d'un dispositif de photographie porté par l'aéronef pour le relevé et la cartographie, le paramètre de photographie comprenant une zone de photographie de photo individuelle de l'aéronef pour le relevé et la cartographie à une altitude de vol définie, et chaque point de photographie correspondant à une zone de photographie de photo individuelle ; et

la détermination de la relation de position relative entre le point de photographie central et les quatre points de photographie périphériques et de la zone de photographie combinée correspondant à l'ensemble de points de photographie combinée selon l'indice de degré de chevauchement de photos prédéfini et la zone de photographie de photo individuelle ;

la détermination de la pluralité de points d'emplacement de photographie comme points d'échantillonnage pour le relevé et la cartographie d'un aéronef pour le relevé et la cartographie comprenant :

la détermination de la pluralité de points d'emplacement de photographie comme points d'échantillonnage pour le relevé et la cartographie sur la base desquels l'aéronef pour le relevé et la cartographie effectue le relevé et la cartographie dans la zone devant être relevée et cartographiée à l'altitude de vol.

**8.** Le procédé selon la revendication 7, le procédé comprenant en outre, avant la détermination, à l'intérieur d'une zone devant être relevée et cartographiée, d'une pluralité de zones de photographie combinée pour le relevé et la cartographie selon une forme et une taille de la zone de photographie combinée correspondant à l'ensemble de points de photographie combinée et une forme et une taille de la zone devant être relevée et cartographiée :

la détermination d'une taille d'une photo individuelle selon une taille d'image du dispositif de photographie et une largeur de pixel du dispositif de photographie ;

la construction d'un système de coordonnées bidimensionnelles, et la sélection d'un point cible dans le système de coordonnées bidimensionnelles comme point de photographie central ;

la génération d'une photo centrale dans le système de coordonnées bidimensionnelles selon le point de photographie central et la taille de la photo individuelle ;

la génération de quatre photos périphériques qui satisfont l'indice de degré de chevauchement de photos prédéfini avec la photo centrale dans un coin supérieur gauche, un coin inférieur gauche, un coin supérieur droit et un coin inférieur droit de la photo centrale, respectivement ;

la détermination d'une valeur de coordonnées du point de photographie périphérique correspondant à chaque photo périphérique dans le système de coordonnées bidimensionnelles selon une relation d'association entre la taille de la photo individuelle et la zone de photographie de photo individuelle ; et

la détermination de la relation de position relative entre le point de photographie central et les quatre points de photographie périphériques selon des valeurs de coordonnées du point de photographie central et de chaque point de photographie périphérique dans le système de coordonnées bidimensionnelles.

**9.** Le procédé selon la revendication 7, le procédé comprenant en outre, avant l'obtention d'un paramètre de photographie d'un dispositif de photographie porté par l'aéronef pour le relevé et la cartographie :

le calcul de l'altitude de vol définie selon une largeur de pixel du dispositif de photographie, une longueur focale d'objectif du dispositif de photographie et une résolution de pixel au sol.

**10.** Le procédé selon la revendication 7, dans lequel l'obtention d'un paramètre de photographie d'un dispositif de photographie porté par l'aéronef pour le relevé et la cartographie comprend :

le calcul de la zone de photographie de photo individuelle de l'aéronef pour le relevé et la cartographie à l'altitude de vol définie selon une largeur de pixel du dispositif de photographie, une zone d'image du dispositif de photographie et une résolution de pixel au sol.

**11.** Le procédé selon la revendication 7, le procédé comprenant en outre, après la détermination de la pluralité de points d'emplacement de photographie comme points d'échantillonnage pour le relevé et la cartographie sur la base desquels l'aéronef pour le relevé et la cartographie effectue le relevé et la cartographie dans la zone devant être relevée et cartographiée à l'altitude de vol :

l'envoi de chacun des points d'échantillonnage pour le relevé et la cartographie à l'aéronef pour le relevé et la cartographie, de telle sorte que lorsque l'aéronef pour le relevé et la cartographie vole jusqu'à chacun des points d'échantillonnage pour le relevé et la cartographie selon l'altitude de vol, une collection de photos de relevé et de cartographie correspondant à la zone devant être relevée et cartographiée soient capturées ; et

la définition de chaque photo de la collection de photos de relevé et de cartographie comme devant être synthétisée en une image de relevé et de cartographie concordant avec la zone devant être relevée et cartographiée.

12. Un terminal de commande, comprenant :

un ou plusieurs processeurs ; et
un appareil de stockage, configuré pour stocker un ou plusieurs programmes, dans lequel lorsque ces un ou plusieurs programmes sont exécutés par ces un ou plusieurs processeurs, ces un ou plusieurs processeurs mettent en aeuvre le procédé de planification de points d'échantillonnage pour le relevé et la cartographie selon l'une quelconque des revendications 1 à 11.

| Obtaining a combined photographing area corresponding to a combined photographing point set | ⌇Step 110 |

↓

| Determining, within an area to be surveyed and mapped, one or a plurality of combined photographing areas for surveying and mapping according to the combined photographing area corresponding to the combined photographing point set and information of the area to be surveyed and mapped | ⌇Step 120 |

↓

| Determining, in the combined photographing area for surveying and mapping, a plurality of photographing location points according to a preset relative position relationship between each two photographing points in the combined photographing point set | ⌇Step 130 |

↓

| Determining the plurality of photographing location points as the sample points for surveying and mapping based on which an aircraft for surveying and mapping performs surveying and mapping in the area to be surveyed and mapped | ⌇Step 140 |

FIG. 1a

FIG. 1b

Obtaining a combined photographing area corresponding to a combined photographing point set — Step 210

selecting a location point in the area to be surveyed and mapped — Step 221

Determining a combined photographing area for surveying and mapping within the area to be surveyed and mapped according to the location point and the combined photographing area — Step 222

Whether the combined photographing area for surveying and mapping can completely cover the area to be surveyed and mapped — Step 223

Yes

No

Selecting a new locating point in the area to be surveyed and mapped — Step 224

Step 220

Mapping the central photographing point in the combined photographing point set to an area midpoint of the combined photographing area for surveying and mapping, and determining the area midpoint as a photographing location point — Step 231

Mapping each of the four peripheral photographing points to the combined photographing area for surveying and mapping according to a preset relative position relationship between each peripheral photographing point and the central photographing point in the combined photographing point set, and determining a plurality of mapping points formed by mapping as the plurality of photographing location points — Step 232

Step 230

Determining the plurality of photographing location points as the sample points for surveying and mapping based on which an aircraft for surveying and mapping performs surveying and mapping in the area to be surveyed and mapped — Step 240

Sending each of the sample points for surveying and mapping to the aircraft for surveying and mapping, so that when the aircraft for surveying and mapping flies to each of the sample points for surveying and mapping according to the flight altitude, a surveying and mapping photo collection corresponding to the area to be surveyed and mapped is captured — Step 250

FIG. 2a

110   110 210   210

10⌇●        ●⌇20

110   110 210   210

FIG. 2b

| Combined Photographing Prea Obtaining Module | ⌇310 |
|---|---|
| Combined Photographing Area for Surveying and Mapping Determining Module | ⌇320 |
| Photographing location Point Determining Module | ⌇330 |
| Sample Point for Surveying and Mapping Determining Module | ⌇340 |

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017221241 A1
- WO 2018176376 A1